Europäisches Patentamt

(19) European Patent Office

Office européen des brevets

(11) Numéro de publication: **0 082 899 B1**

(12) **FASCICULE DE BREVET EUROPEEN**

(45) Date de publication du fascicule du brevet: ·
06.08.86

(21) Numéro de dépôt: **81402078.0**

(22) Date de dépôt: **24.12.81**

(51) Int. Cl.⁴: **B 65 G 33/26**, B 65 G 33/32

(54) Perfectionnement aux vis sans fin utilisées pour le déplacement de produits en vrac.

(43) Date de publication de la demande:
**06.07.83 Bulletin 83/27**

(45) Mention de la délivrance du brevet:
**06.08.86 Bulletin 86/32**

(84) Etats contractants désignés:
**AT BE CH DE GB IT LI LU NL SE**

(56) Documents cités:
**DE - U - 1 969 057**
**DE - U - 6 806 212**
**FR - A - 750 963**
**FR - A - 1 572 866**
**US - A - 2 014 636**
**US - A - 2 138 576**
**US - A - 3 187 882**
**US - A - 3 705 644**

(73) Titulaire: **Cantenot, Laurence, 34bis rue des Pierrelais,
F-92320 Chatillon (FR)**

(72) Inventeur: **Cantenot, Laurence, 34bis rue des Pierrelais,
F-92320 Chatillon (FR)**

(74) Mandataire: **Wagret, Jean-Michel et al, Propi
Conseils 23 rue de Léningrad, F-75008 Paris (FR)**

ACTORUM AG

## Description

La présente invention concerne des perfectionnements aux dispositifs du type vis sans fin entraînés en rotation et utilisés pour le déplacement de produits en vrac à l'état pulvérulent ou granulaire.

De tels dispositifs constitués d'une vis sans fin ou «vis d'Archimède» sont couramment utilisés pour la mise en mouvement de produits en vrac sous forme de poudre, granules, et généralement de produits en vrac de granulométrie appropriée; de telles vis sont également utilisables pour le transport ou le déplacement de produits à l'état pâteux, par exemple dans une extrudeuse.

Les vis sans fin servent ainsi à l'acheminement longitudinal le long de la vis des produits comme à leur déplacement au sein d'une enceinte pour obtenir un effet de brassage en vue de l'homogénéisation des produits.

La présente invention concerne les vis sans fin utilisées tant pour le déplacement longitudinal, notamment pour l'évacuation de produits granuleux ou pâteux ou pulvérulents en vrac, comme pour le déplacement au sein d'une enceinte dans un but de malaxage.

Une difficulté rencontrée dans l'utilisation de telles vis sans fin et auxquelles l'invention visera à remédier, concerne l'importance du couple de démarrage qu'il est nécessaire d'appliquer à la vis lorsqu'elle est totalement immergée dans la masse du produit et que ce dernier possède, à la suite d'une phase prolongée de repos, une certaine compacité, ou lorsque le produit oppose simplement l'inertie d'une masse au repos.

L'expérience montre que dans ce cas, il est nécessaire d'appliquer à la vis un couple particulièrement élevé qui peut être jusqu'à 20 fois et plus le couple nécessaire pour le simple entretien du mouvement de rotation, une fois que ce dernier est amorcé.

On comprend les inconvénients de cette situation.

Il serait en effet théoriquement nécessaire pour permettre d'appliquer à la vis la force d'entraînement nécessaire au démarrage, d'utiliser un moteur d'une puissance plus que décuplée par rapport à la puissance nécessaire pour les besoins de l'installation en régime de croisière, c'est-à-dire après la mise en rotation et le démarrage de la vis.

Cette puissance représente par conséquent un investissement important et particulièrement inutile car le moteur ne sera utilisé avec sa puissance maximum qu'au moment du démarrage et l'investissement que représente l'utilisation de ce moteur restera donc stérile et inutile pendant toute la durée d'utilisation normale de la vis.

Mais en outre, dans le cas notamment de vis d'évacuation horizontale et balayant la base d'un silo en vue de l'évacuation de ce dernier, il serait nécessaire de prévoir entre le moteur et la vis une boîte de transmission possédant des propriétés mécaniques en rapport avec la force transmise depuis le moteur à la vis, ce qui accroît également considérablement les investissements d'un tel équipement.

Enfin, le risque demeure d'un cas particulièrement difficile où malgré la puissance du moteur, la prise en masse du matériau bloque toute mise en mouvement de la vis et on risque simplement dans de tels cas de provoquer la rupture de pièces mécaniques, notamment au niveau de la boîte de transmission, et il est alors nécessaire de dégager le silo à la main.

La difficulté à laquelle l'invention vise à remédier, celle de la résistance du matériau au moment du démarrage, provient de ce que toute la vis attaque de front l'ensemble de la masse dans laquelle elle est immergée ou noyée, et cette masse offre au démarrage une inertie très supérieure au couple de mise en rotation.

Plutôt que de prévoir un équipement qui multiplierait la force de mise en rotation (puissance du moteur) le système selon l'invention vise à partir de la puissance disponible et qui est celle normalement nécessaire pour l'entretien du mouvement, après démarrage de la vis, et à diviser la zone d'attaque de façon à n'appliquer la puissance développée par le moteur et transmise à la vis que sur une partie seulement du front de résistance offert par le matériau à déplacer, de sorte que cette résistance locale sera suffisamment faible pour permettre d'être équilibrée par la puissance du moteur.

L'invention vise ainsi à diviser la vis en un certain nombre de portions ou sections auxquelles successivement la puissance du moteur sera appliquée pour permettre le démarrage, non pas de la totalité de la vis en une seule fois, mais successivement de chacune des portions individuelles de la vis.

On connaît déjà par le US-A-2 138 576 une vis sans fin décomposée en plusieurs sections embrayables les unes aux autres, grâce à des éléments d'accouplement disposés à chaque extrémité; ces sections comportent un arbre central plein, de sorte que leur alignement ne peut être maintenu que par insertion dans une conduite formant vis d'Archimède.

On connaît également par le DE-U-6 806 212 un convoyeur formé d'une vis à au moins deux sections distinctes, chaque section étant entraînée à une vitesse différentielle par rapport à l'autre pour permettre un effet de malaxage et d'homogénéisation des matières transportées.

La présente invention concerne un dispositif pour la mise en mouvement d'un milieu en vrac, tel qu'un milieu pulvérulent, granuleux ou pâteux, du type constitué d'une vis sans fin entraînée en rotation, du type dans lequel la vis se compose d'une pluralité de sections distinctes entre elles mais reliées l'une à l'autre cinétiquement par des moyens d'entraînement tels que des butées aptes à venir en appui mutuel d'une section à l'autre et permettant de commander temporairement la transmission ou non du mouvement d'une section amont à une section aval (US-A-2 138 576), ce dispositif étant caractérisé en ce que les sections ont chacune la forme d'un manchon sur lequel se développe une portion de vis et sont montées sur un arbre commun.

D'autres caractéristiques et avantages de l'invention ressortiront encore de la description qui suit et qui est donnée en rapport avec une forme de réalisation particulière présentée à titre d'exemple non limitatif et en se référant aux dessins annexés.

La figure 1 représente une vue en élévation longitudinale d'une vis hélicoïdale selon l'invention.

La figure 2 représente une vue en perspective de la vis de la figure 1.

La figure 3 représente une vue de détail du dispositif d'accouplement débrayable situé sur les extrémités transversales de chacune des sections de la vis, une des deux sections voisines étant écartée l'une par rapport à l'autre pour l'intelligence de la figure et étant représentée en position d'embrayage dans le sens de rotation tel que représenté à la figure 2.

La figure 4 représente la vis selon la vue de la figure 2 précédente, après une rotation partielle de la section amont pour désaccoupler le dispositif d'entraînement par rapport à la section aval.

La figure 5 représente une vue en perspective des extrémités en regard des deux sections représentées à la figure 4, les deux extrémités étant en position écartées l'une par rapport à l'autre pour l'intelligence du dessin.

Les figures 6 et 7 représentent en plan deux sections voisines de la vis, en positions successivement d'entraînement (figure 6) et désaccouplées (figure 7).

La figure 8 représente une variante dans laquelle les sections sont flexibles les unes par rapport aux autres.

Les figures 9, 10 et 11 représentent trois positions de trois sections de vis selon une autre variante et les figures 12, 13 et 14 illustrent d'autres variantes.

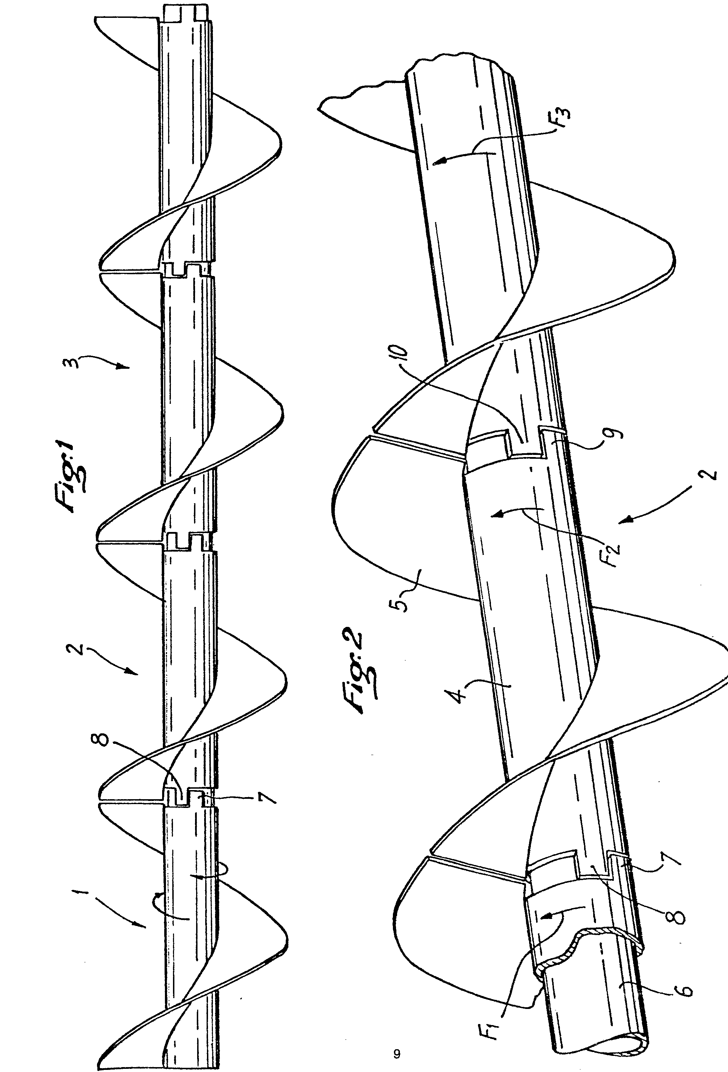

Selon les figures 1 à 7, on voit que la vis pour le déplacement ou la mise en mouvement d'un milieu en vrac est constituée d'une pluralité de sections 1, 2, 3.

Dans l'exemple ici réalisé, les sections sont identiques entre elles et peuvent ainsi être réalisées par moulage.

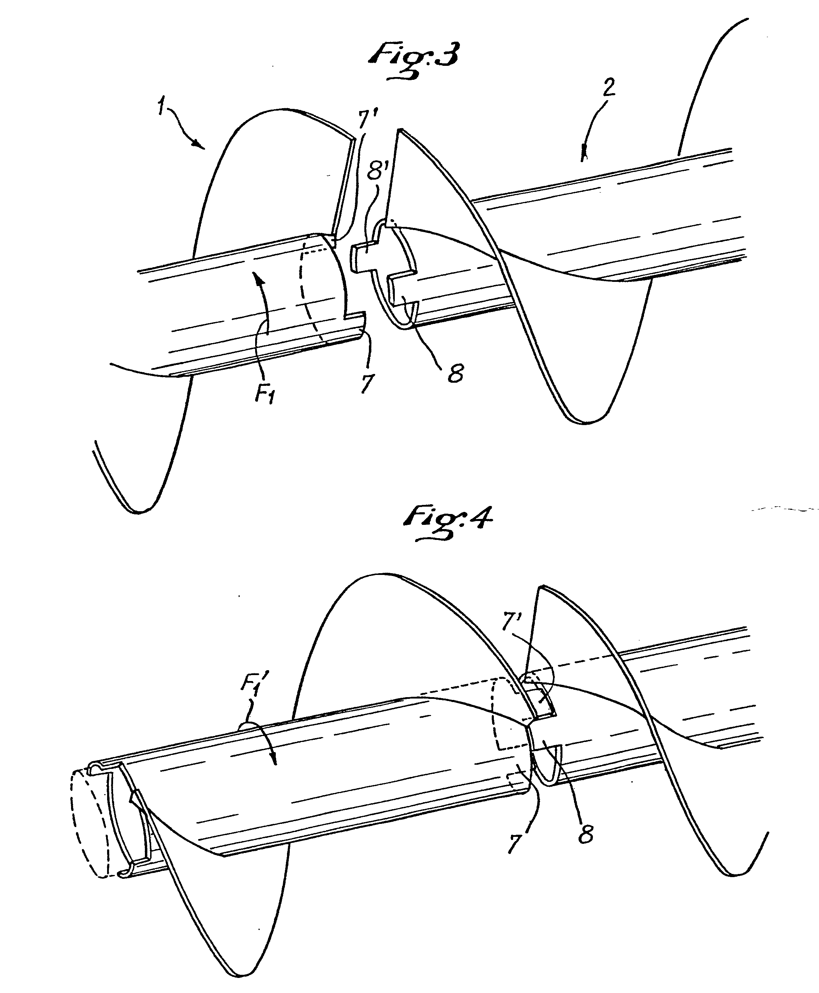

Selon la figure 2, on voit que chaque section, par exemple la section 2 est constituée d'un manchon 4 sur lequel se développe une vis 5.

Les sections 1, 2 et 3 sont montées folles sur un arbre central 6 lequel a pour fonction que d'assurer la linéarité de l'ensemble.

La transmission est effectuée depuis une extrémité par exemple la section 1 est reliée à un organe moteur par tout moyen approprié, par exemple la section 1 est engrenée sur l'arbre de sortie d'une boîte de transmission (non représentée).

La section 2 qui est montée folle sur l'arbre 6 est entraînée à son tour par la section 1 par le jeu des butées 7 et 8 qui sont au contact l'une de l'autre.

Chacune de ces butées est constituée d'un segment de cylindre prolongeant la paroi du manchon appartenant respectivement à chacune des deux sections voisines.

On comprend qu'en régime normal, la section 1 étant entraînée selon la flèche $F_1$, la butée 7, venant en appui sur la butée 8, entraîne à son tour en rotation la section 2 selon la flèche $F_2$; et ainsi de suite, la butée 9 de la section 2, en appui sur la butée 10 de la section 3 entraînant à son tour cette dernière en rotation selon la flèche $F_3$.

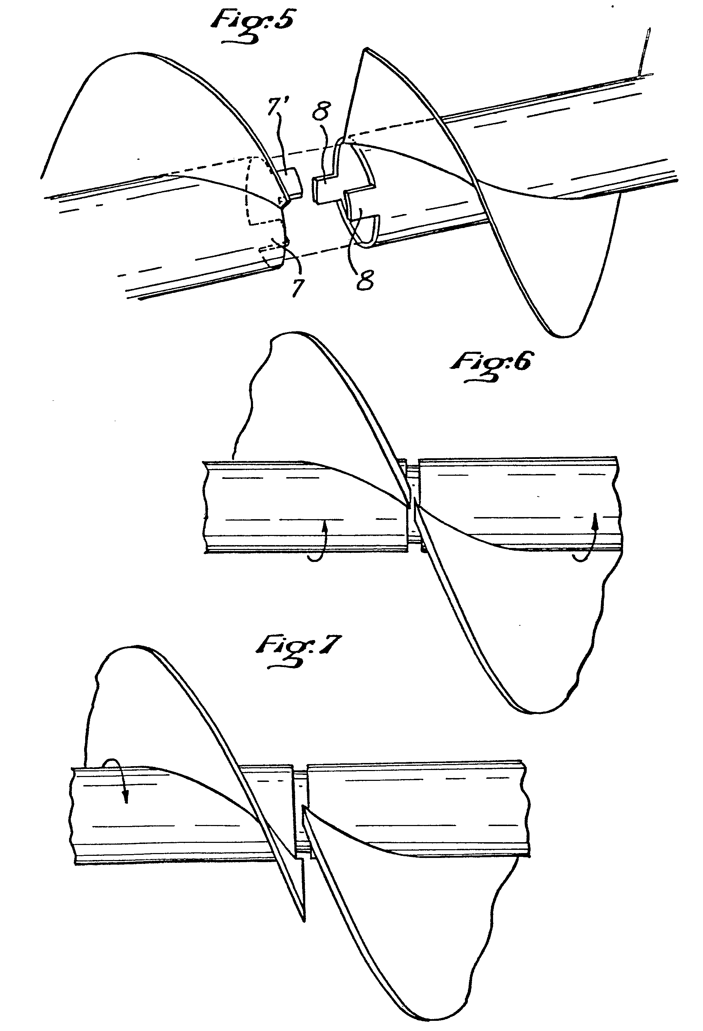

Selon la figure 3, on voit qu'il est possible de disposer en réalité sur chaque manchon appartenant à une section de la vis deux butées opposées, telles que les butées 8 et 8′ appartenant à la section 2 ou 7 et 7′ appartenant à la section 1.

Dans le sens de rotation de la flèche $F_1$, on voit que la butée 7 (de la section 1) vient en appui et repousse en rotation la butée 8 (de la section 2); et de même la butée 7′ (appartenant à la section 1) joue le même rôle et repousse en rotation la butée 8′ de la section 2; l'ensemble constitue ainsi un dispositif d'entraînement en rotation.

Si, à l'occasion d'un démarrage difficile, le couple d'entraînement de la vis apparaît impuissant à vaincre l'inertie et la résistance opposée par le matériau, il est alors possible d'effectuer, par inversion du sens de rotation du moteur, un mouvement de rotation inverse à la section motrice 1; on désaccouple ainsi les butées 7 et 8.

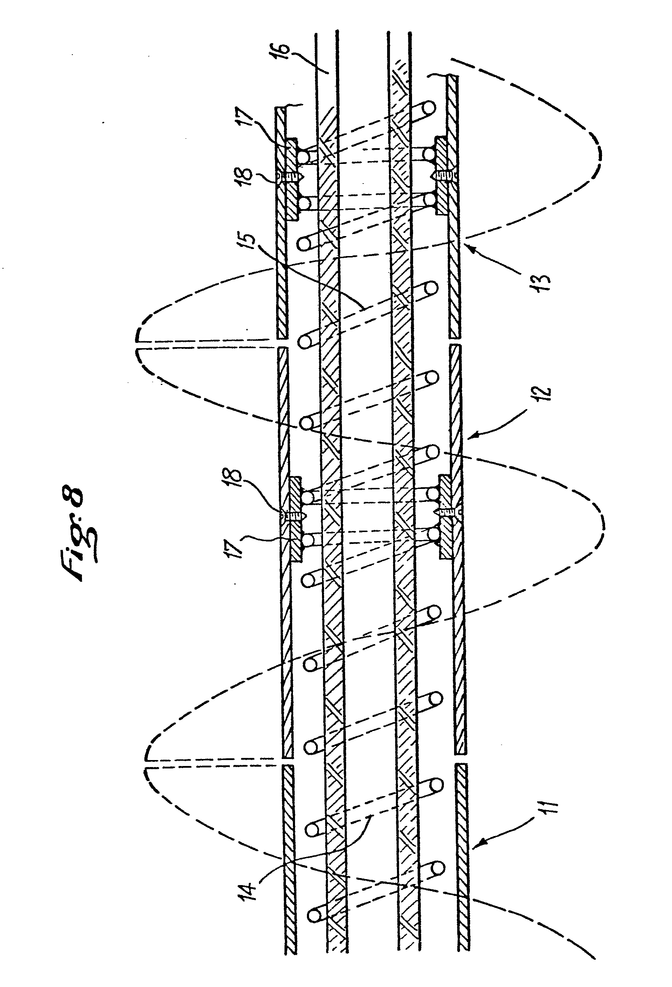

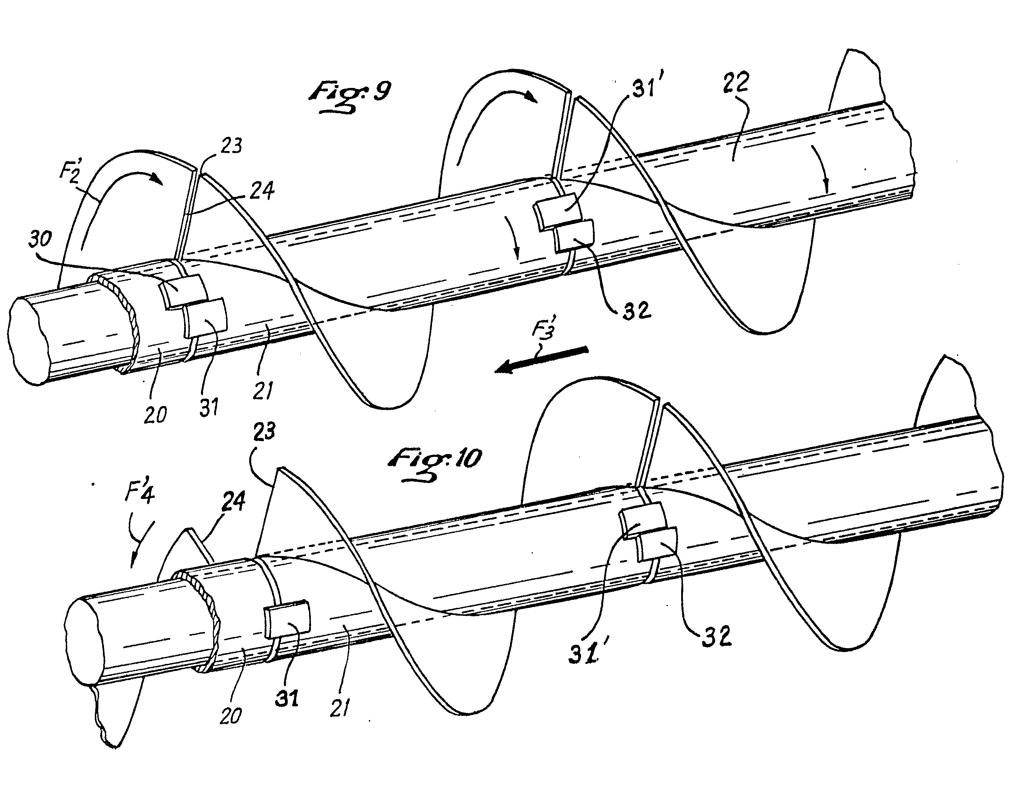

Après une rotation partielle selon la flèche $F'_1$, la butée 7 s'est éloignée de la butée 8 étant entraînée en sens inverse; la section 1 a ainsi tourné légèrement tandis que la section 2 est restée immobile; après une rotation suffisante de la section 1, la butée 7 va alors rencontrer (par sa face opposée) la butée 8′, tandis que la butée 7′ va venir en appui sur la butée 8 (figures 4 et 5).

Dans ces conditions, l'inversion du sens de rotation de la section motrice 1 entraîne, mais après un temps mort, l'inversion de la rotation de la section entraînée 2; à son tour l'inversion de la rotation de la section 2 se transmet, également après un temps mort, à la section aval 3.

On comprend qu'il est ainsi possible après inversion du sens de rotation du moteur de désaccoupler (par rapport au sens d'entraînement normal) successivement toutes les sections.

Par retour ultérieur du moteur à son sens de rotation normal, la section motrice 1 va revenir vers son sens de rotation normal correspondant au sens de travail de la vis.

Mais, lorsque la section 1 repart dans le sens de rotation de travail normal, elle n'entraîne pas alors immédiatement la section ultérieure 2 qui se trouve désaccouplée ainsi qu'on l'a dit ci-dessus.

Ce n'est qu'après une rotation partielle que les butées 7 et 8 d'une part et 7′ et 8′ d'autre part reviendront en contact et provoqueront l'entraînement de la section 2 par rapport à la section 1.

Mais, pendant une période de rotation partielle, la section 1 est seule entraînée et le couple moteur qu'elle reçoit depuis le dispositif d'entraînement est alors largement suffisant pour vaincre l'inertie et la résistance localisée à la longueur de la section 1 et opposée par le matériau.

Lorsque la section 1 a pu ainsi démarrer, et après une période de rotation suffisante, les butées 7 et 8 d'une part et 7', 8' d'autre part arrivent alors en contact normal et la section 1 se trouve en position d'engagement par rapport à la section mue 2; cette dernière se trouve alors également entraînée à son tour.

Mais alors la section 1 travaille un milieu dont l'inertie a été vaincue et qui est déjà en mouvement de sorte que cette section n'absorbe qu'une faible partie du travail fourni par le moteur et la puissance de ce dernier peut être appliquée essentiellement à la section 2, cette section bénéficiant alors de la plus grande partie de la puissance du moteur et pouvant ainsi vaincre la résistance localisée et opposée par le milieu à déplacer dans sa partie limitée aux éléments qui sont en contact de la section 2; de sorte que la section 2 peut à son tour être mise en mouvement, alors qu'elle n'entraîne pas encore les sections ultérieures qui ont été précédemment désaccouplées.

Et ainsi de suite, la section 2, après avoir pu vaincre la résistance du milieu ne nécessitant plus qu'un travail de routine dans un milieu en mouvement, peut alors sans difficulté transmettre son mouvement à la section 3 qui bénéficie à son tour de la plus grande partie de la puissance du moteur pour vaincre l'inertie localisée du milieu à déplacer.

Et de proche en proche, les sections sont successivement entraînées et sont ainsi aptes à vaincre localement l'inertie d'un milieu au repos.

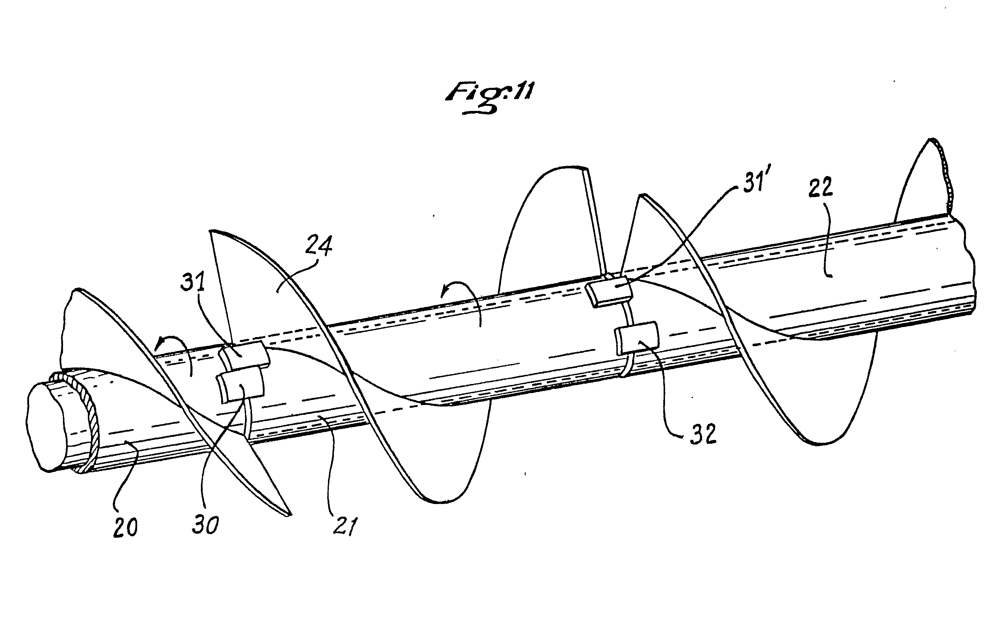

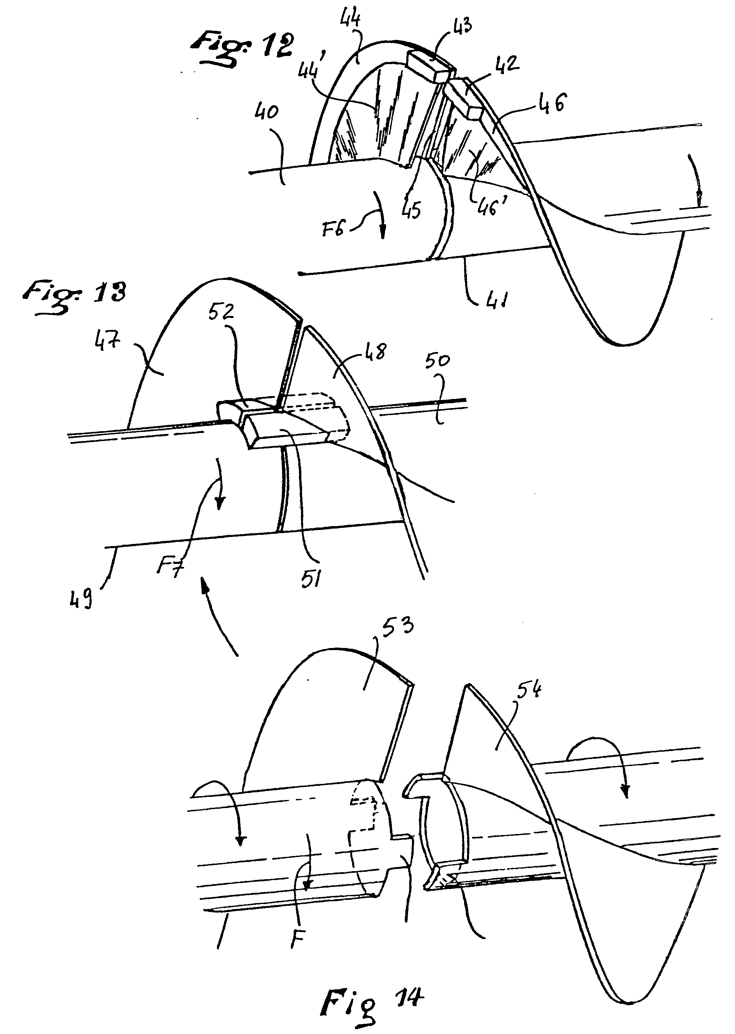

Les figures 6 et 7 montrent une vue en plan du positionnement respectif des bords d'attaque des deux spires appartenant à deux sections voisines; on voit que ces deux bords sont séparés par un faible jeu suffisant pour permettre le déplacement relatif d'une spire par rapport à l'autre sans contact; les seuls contacts d'une section par rapport à la section voisine étant assurés par les butées précédemment décrites.

Les sections peuvent être de dimension quelconque, en fonction des besoins et des matières que la vis est appelée à déplacer.

D'une façon générale, on prévoira une section pour une spire ou un multiple de spire.

Les sections étant constituées d'éléments identiques c'est-à-dire d'un manchon pourvu d'une ou plusieurs spires extérieures, peuvent être réalisées par moulage et on peut ainsi, en enfilant autant de sections que nécessaire sur un arbre d'alignement, réaliser des vis de dimension appropriée, une au moins des sections d'extrémité étant entraînée sur un organe moteur.

Selon une variante représentée à la figure 8, l'entraînement d'une section par rapport à l'autre peut être réalisé par des moyens de transmission formés de ressorts travaillant à la torsion tels que par exemple une barre de torsion ou un ressort hélicoïdal.

Dans l'exemple de la figure 8, les sections 11, 12 et 13 sont reliées entre elles par des ressorts hélicoïdaux 14, 15; par exemple ces ressorts peuvent être montés sur un arbre d'alignement central 16 et les extrémités des ressorts sont reliées par brasure, soudure ou autre moyen sur une bague intérieure 17 sur laquelle le manchon de chaque section est maintenu par des vis 18.

On comprend que le mouvement de transmission depuis la section motrice se transmet à la section aval voisine par l'intermédiaire du ressort, ainsi en cas de résistance excessive du matériau, les sections aval peuvent rester sensiblement fixes, les sections amont situées à proximité de la transmission du mouvement recevant le travail du moteur et ce travail ainsi localisé sur ces sections étant alors aptes à provoquer le démarrage des sections amont de la vis; puis, la résistance au démarrage étant vaincue localement, le travail est transmis aux zones voisines qui peuvent alors déplacer la masse inerte jusqu'à ce que l'ensemble de la vis se soit ainsi mis en mouvement.

Le dispositif des figures 1 à 7 ne comporte aucune souplesse dans la transmission et c'est au contraire brutalement que la butée de la section motrice arrive au contact de la butée de la section aval voisine à mouvoir et provoque la mise en rotation de cette dernière; le choc ainsi appliqué à la section aval voisine à mouvoir représente un avantage dans la mesure où elle permet un effet de choc ou de butoir permettant de vaincre la résistance locale de la matière inerte.

Cet effet de butoir ne se trouve pas dans l'exemple de la figure 8 qui peut cependant dans d'autres cas présenter un avantage par la souplesse de l'ensemble de la vis permettant une adaptation à des résistances temporaires locales; la transmission flexible forme un dispositif amortisseur qui permet de répartir et d'équilibrer le long de la vis des résistances locales.

Et selon une variante c'est l'ensemble de la vis elle-même qui pourrait être réalisé en matériau élastiquement déformable en assurant ainsi une transmission du mouvement d'une section (considérée comme une partie quelconque de la vis) aux parties aval avec un effet de torsion, par déformation élastique.

Dans le cas d'une transmission avec effet de torsion élastique, la mise sous tension des parties aval de la vis, par suite de la résistance de la matière au contact de ces parties, ajoute un couple à l'entraînement ultérieur de ces parties depuis la transmission des parties amont entraînées depuis les organes moteurs et qui ont pu en premier vaincre la résistance du milieu inerte.

Divers aménagements et variantes peuvent être introduits aux organes ou éléments décrits ci-dessus sans sortir du cadre de la présente demande.

C'est ainsi que les butées 7 et 8, ainsi que les butées 7' et 8' (figures 1 à 5) peuvent être prévues en forme générale de «queue d'aronde»; les faces d'attaque d'une butée sur l'autre étant ainsi inclinées par rapport à l'axe longitudinal de l'hélice.

On comprend en effet que la résistance du matériau déplacé, s'opposant aux mouvements de la vis, tend à chasser vers l'extérieur (dans le sens opposé au sens de déplacement du matériau) les différentes sections de la vis.

En utilisant un entraînement par des butées en forme de queue d'aronde, on assure une certaine solidarisation de chaque manchon ou section de vis par rapport à la suivante en s'opposant ainsi aux mouvements d'échappement vers l'extérieur (aval) des sections de vis dans un sens opposé à l'entraînement du produit.

En toute hypothèse ce mouvement d'échappement vers l'extérieur est limité car en bout d'arbre une butée s'oppose au déplacement de la dernière section de vis ou section périphérique; cependant il subsiste entre les différentes sections un certain jeu et toutes les sections étant en appui l'une sur l'autre vers la section périphérique, elle-même en appui sur sa butée d'arrêt, l'ensemble des jeux entre les sections vient s'additionner et se réalise au niveau du jeu entre la section qui est directement connectée au mouvement d'entraînement et la section suivante; l'utilisation de butées en queue d'aronde permet d'assurer un entraînement d'une section sur l'autre en contrebalançant le phénomène de poussée vers l'extérieur.

Selon une variante non représentée aux dessins, chaque section peut être reliée cinétiquement à la section voisine par l'intermédiaire d'un mandrin cylindrique concentrique situé d'un côté du manchon ou section de vis, et venant s'engager dans un logement récepteur situé à l'extrémité de la section voisine.

Dans ces conditions chaque section de vis comporte d'un côté un mandrin d'emboîtement mâle et du côté opposé un logement de forme complémentaire; de sorte que chaque section de vis pénètre par son mandrin d'accouplement dans le logement de la vis voisine et reçoit elle-même le mandrin mâle de la vis située du côté opposé.

Dans l'interface séparant le mandrin mâle du logement récepteur femelle, on peut prévoir au moins une gorge située sur un élément et recevant une ou plusieurs butées situées sur l'autre élément.

Chaque butée vient en appui sur une extrémité de la gorge en permettant un certain jeu se traduisant par un mouvement angulaire réciproque des deux sections de vis entre l'appui d'une butée sur l'extrémité de la gorge et son appui sur l'extrémité opposée de ladite gorge réceptrice de cette butée.

Le fonctionnement réciproque des deux sections de vis est identique à celui qui a été décrit; la rotation de la vis motrice amène à un certain moment une butée en position d'appui sur l'extrémité de la gorge et provoque par conséquent l'entraînement de la section voisine; dans le mouvement inverse la rotation de la section de vis motrice se fait à vide, sans entraîner la rotation de la section voisine, jusqu'à ce que la butée vienne à son tour en appui sur l'extrémité opposée de sa gorge réceptrice.

On comprend que ce mouvement de rotation inverse permet de désaccoupler l'entraînement d'une section sur l'autre.

Selon une variante le mandrin d'emboîtement mâle et son logement récepteur comprennent un accouplement par vis, le mouvement de vissage comportant une butée de préférence à chaque extrémité du pas de vis.

Ainsi, la rotation de la section motrice amène nécessairement après un certain nombre de tours la section aval voisine à mouvoir en position d'entraînement, une butée étant en appui; dans le mouvement de rotation inverse de la section motrice, les deux sections restent accouplées par les pas de vis disposés respectivement sur le mandrin mâle et sur son logement femelle, jusqu'à ce que, après un certain nombre de rotations, la ou les butées viennent en appui, ce qui détermine alors l'entraînement de la section mue par la section motrice, dans un sens inverse du précédent.

Dans le cas où les sections successives conformant la vis de déplacement sont assemblées entre elles par un organe d'emboîtement pénétrant dans un logement récepteur de la section voisine, un arbre central assurant la liaison des différentes sections peut ne pas être nécessaire, les différentes sections étant suffisamment solidarisées par leurs organes d'emboîtement mutuels.

Dans une variante correspondant à la réalisation des figures 1 et 2, on peut prévoir que l'arbre serve à la transmission du mouvement tout en assurant la linéarité de l'ensemble.

Dans cette variante l'arbre peut être relié à une extrémité aux organes moteur et c'est l'extrémité opposée de l'arbre qui est solidarisée sur une section de la vis, qui joue alors le rôle de section motrice, entraînant de proche en proche la section voisine, puis les sections plus éloignées de l'extrémité de l'arbre.

Les figures 9, 10 et 11 représentent une variante de réalisation dans laquelle les sections de vis sont formées, comme dans l'exemple des figures 1 à 7, le manchon monté sur un arbre central (assurant la linéarité de l'ensemble), les manchons comportant extérieurement chacun une spire, les spires successives formant ensembles la vis hélicoïdale.

Les butées d'entraînement permettant à une section motrice de venir en appui sur la section aval voisine à mouvoir sont ici constituées de taquets qui sont rapportés sur la paroi extérieure des manchons de façon à chevaucher sensiblement la solution de continuité séparant deux manchons, chaque taquet étant solidaire, par exemple par soudage d'un manchon; dans l'exemple des figures 9 à 11 on voit que le taquet 30, solidaire de la section 20 est en appui sur le taquet 31 de la section 21 et la rotation de la section 20 selon la flèche $F'_2$ entraîne donc la rotation correspondante de la section 21; de même que le taquet 31' solidaire de la section 21, venant en appui sur le taquet 32 de la section 22 provoque la mise en rotation de cette dernière.

Dans ce mouvement, la vis d'entraînement provoque le déplacement de la matière en vrac dans le sens de la flèche $F'_3$.

Lorsque l'on veut provoquer le désaccouplement momentané des spires successives correspondant aux sections successives de la vis, on provoque, comme exposé précédemment, la rotation inverse de la section motrice, c'est-à-dire de la section 20.

Ceci est représenté à la figure 10 et l'on voit que la section 20 est alors entraînée dans le sens de la flèche F'₄; dans ce mouvement le taquet 30 est alors éloigné par rapport au taquet 31 de même que les deux bords respectivement 23 et 24 de la solution de continuité séparant les deux spires s'éloignent l'un de l'autre; le mouvement de la section 20 (en sens inverse du sens normal) est limité à cette section, l'entraînement du taquet 30 au 31 ne se faisant pas, par absence de contact de ces deux éléments.

On remarque que dans ce mouvement le désaccouplement d'une spire par rapport à l'autre se fait par éloignement des bords de la solution de continuité d'une spire à l'autre, ce qui peut présenter des avantages par rapport à la solution des figures 1 à 7 dans lesquelles le désaccouplement des spires se fait par un mouvement de «cisaillement» des deux bords des spires adjacentes.

Le mouvement de rotation inverse représenté dans sa période initiale à la figure 10 se poursuit jusqu'à ce que le taquet 30 ayant parcouru sensiblement un tour vienne à nouveau en appui sur le taquet 31, mais par les faces opposées aux faces d'appui précédentes, cette position d'appui étant représentée à la figure 11; dans cette figure on voit que le taquet 30 de la section motrice 20 est venu en appui sur le taquet 31 de la section 21 et, du fait de la position d'appui de ces deux organes, la section motrice 20 entraîne, dans le sens indiqué par les flèches de la figure 11 la section 21.

Et, la section 21, considérée alors comme section motrice, va à son tour faire sensiblement un tour jusqu'à ce que son taquet 31' vienne en appui sur le taquet 32 de la section 22, par les faces opposées aux faces d'appui mises en jeu dans la position de la figure 9, et à ce moment, la section 21 entraîne, dans le mouvement de rotation inversé la section 22.

Le mouvement peut ainsi se transmettre sur toutes les sections successives de la vis; lorsque cette inversion des sections est obtenue, la première section ou section 20 peut alors reprendre son sens normal de rotation et attaquer la matière à déplacer; et pendant sensiblement une rotation, la section 20 sera la seule section opérationnelle et reliée à l'entraînement général ce qui permettra de vaincre la résistance de la matière localisée à cette section; après sensiblement un tour, dans le sens de rotation de la flèche F'₂, le taquet 30 revient alors en position d'appui sur le taquet 31 comme représenté à la figure 9 et on retrouve alors l'entraînement de la section 21; mais cette section 21 est alors entraînée seule par la section 20 sans entraîner à son tour les sections ultérieures, ce n'est qu'après sensiblement un tour, lorsque le taquet 31' sera revenu en appui sur le taquet 32, selon la position de la figure 9, que la section 22 sera à son tour entraînée par la section 21.

La figure 12 représente une variante dans laquelle l'entraînement de la section de vis 41, par la section 40, se fait par des taquets respectivement 42 et 43 positionnés à la périphérie de l'hélice (et non pas sur le manchon central), ceci au niveau de la solution de continuité séparant les deux spires successives de l'hélice.

Dans le mouvement normal de la section 40, la spire correspondante 44 de l'hélice vient en butée par son bord 45 contre le bord de la spire voisine 46; et de même la butée ou taquet 43 vient au contact du taquet 42 et le repousse en provoquant ainsi l'entraînement de la spire 46 et de son manchon porteur 41 par la section de la vis 40; on obtient ainsi un couple de poussée plus important et pour éviter toutes déformations des bords jointifs des spires 44 et 46 on a rapporté une tôle de raidissement respectivement 44' et 46'.

La figure 13 représente une variante dans laquelle les taquets ou butées sont positionnés sensiblement au niveau de la solution de continuité entre les deux spires successives respectivement 47 et 48 appartenant aux sections 49 et 50.

Le taquet 51 appartenant à la section 50 déborde par rapport au manchon voisin 49 de même que le taquet 52 déborde sur le manchon voisin 50.

Dans le positionnement représenté à la figure 13, les deux taquets sont au contact et l'entraînement du manchon 50 depuis le manchon 49 se fait dans le sens de rotation de la flèche F₇.

La figure 14 représente enfin une variante sensiblement identique à la vue de la figure 3, étant précisé que le sens de rotation normal est celui qui est indiqué par la flèche F₈ de la figure 14, de sorte que, dans le sens de rotation normal, les branches ou bords des solutions de continuité séparant les deux spires successives, respectivement 53 et 54, viennent en position d'appui dans le sens de rotation normal, la rotation inverse (en vue du désaccouplement en provisoire des deux sections) provoquant l'éloignement des bords de la solution de continuité séparant les deux vis, comme on l'a montré aux figures 9 et 10.

## Revendications

1. Dispositif pour la mise en mouvement d'un milieu en vrac, tel qu'un milieu pulvérulent, granuleux ou pâteux, du type constitué d'une vis sans fin entraînée en rotation, du type dans lequel la vis se compose d'une pluralité de sections (1, 2, 3) distinctes entre elles mais reliées l'une à l'autre cinétiquement par des moyens d'entraînement tels que des butées (7, 8) aptes à venir en appui mutuel d'une section à l'autre et permettant de commander temporairement la transmission ou non du mouvement d'une section amont à une section aval voisine, et caractérisé en ce que les sections ont chacune la forme d'un manchon sur lequel se développe une portion de vis et sont montées sur un arbre commun (6).

2. Dispositif selon la revendication 1, caractérisé en ce que l'arbre (6) est un arbre moteur apte à assurer la transmission du mouvement d'une extrémité à l'autre de la vis voisine assurant ainsi la transmission du mouvement de la section motrice à la section mue, dans un sens de rotation ou dans l'autre de la vis, l'inversion du sens de rotation de la section motrice entraînant le désaccouplement des deux sections voisines jusqu'à ce que la butée motrice après avoir parcouru une rotation partielle vienne en appui par sa face opposée sur une butée de la section mue permettant l'inversion du sens d'entraînement de l'ensemble de l'hélice.

3. Dispositif selon l'une des revendications 1 ou 2 ci-dessus, caractérisé en ce que lesdites butées sont formées de taquets (30, 31) rapportés et solidarisés sur la paroi extérieure du manchon de chaque section et débordant au delà de la paroi terminale dudit manchon pour chevaucher sur l'extrémité du manchon de chaque section voisine.

4. Dispositif selon la revendication 2, caractérisé en ce que les sections distinctes sont montées sur l'arbre moteur par des moyens d'entraînement, chacun de ces moyens étant débrayable en permettant ainsi de mettre en position inactive certaines des sections, les moyens d'embrayage sur l'arbre de chaque section étant aptes à être commandés à distance par des relais pneumatiques, hydrauliques ou électromagnétiques.

5. Dispositif selon la revendication 1, caractérisé en ce que la vis est constituée de sections distinctes (11, 12) reliées entre elles par des organes ressorts travaillant à la torsion tels que barres de torsion ou ressorts hélicoïdaux (14, 15), autorisant une indépendance relative ou rotation des différentes sections.

6. Dispositif selon l'une des revendications 1 ou 2 ci-dessus, caractérisé en ce que chaque section de vis comporte d'un côté un mandrin cylindrique concentrique à l'axe de la vis et de l'autre un logement récepteur, chaque section de vis étant apte à être engagée par son mandrin dans le logement récepteur de la section de vis voisine et à recevoir elle-même par son logement récepteur le mandrin de la section de vis située du côté opposé, l'interface séparant la paroi extérieure d'un mandrin de la paroi intérieure de lon logement récepteur étant prévu avec au moins une butée située sur une paroi et une gorge en forme de segment de cercle, située sur l'autre paroi est réceptrice de ladite butée, l'accouplement cinétique d'une section de vis par rapport à la section voisine se faisant, pour un sens de rotation donnée par appui de la butée sur une extrémité terminale de ladite gorge.

7. Dispositif selon l'une des revendications 1 ou 2 ci-dessus, caractérisé en ce que chaque section de vis comporte d'un côté un mandrin généralement cylindrique et concentrique à l'axe de la vis, et de l'autre un logement récepteur, chaque mandrin d'une section étant apte à être engagé dans le logement récepteur de la section voisine, et l'interface entre le mandrin cylindrique et le logement récepteur comporte des moyens d'accouplement constitués d'un pas de vis permettant la rotation libre d'une section par rapport à la section voisine, pendant un certain nombre de tours, entre une position extrême d'entraînement correspondant à un sens de rotation et la position d'entraînement opposée correspondant au sens de rotation inverse du précédent.

## Claims

1. Device for setting into motion a medium in bulk, such as a medium in the form of powder, granules or paste, of the type constituted by an endless screw driven in rotation, of the type in which the screw is composed of a plurality of sections (1, 2, 3) distinct from one another but connected kinetically to one another by drive means such as stops (7, 8) adapted to come into mutual abutment from one section to the other and making it possible temporarily to control the transmission or nontransmission of the movement from an upstream section to an adjacent downstream section, and characterized in that the sections each have the form of a sleeve on which is developed a portion of screw and are mounted on a common shaft (6).

2. Device according to Claim 1, characterized in that the shaft (6) is a driving shaft adapted to ensure transmission of the movement from one end to the other of the adjacent screw thus ensuring the transmission of the movement of the driving section to the moved section, in one direction of rotation of the screw or in the other, the reversal of the direction of rotation of the driving section bringing about disconnection of the two adjacent sections until the driving stop, after having made a partial rotation, comes into abutment by its opposite face on a stop of the moved section allowing the reversal of the direction of drive of the whole of the helix.

3. Device according to one of Claims 1 or 2 hereinabove, characterized in that said stops are formed by blocks (30, 31) added and connected to the outer wall of the sleeve of each section and projecting beyond the terminal wall of said sleeve to overlap on the end of the sleeve of each adjacent section.

4. Device according to Claim 2, characterized in that the distinct sections are mounted on the drive shaft by drive means, each of these means being disconnectable, thus making it possible to place in inactive position certain of the sections, the means for connection on the shaft of each section being adapted to be remote-controlled by pneumatic, hydraulic or electro-magnetic relays.

5. Device according to Claim 1, characterized in that the screw is constituted by distinct sections (11, 12) connected together by spring members working in torsion such as torsion bars or helical springs (14, 15) allowing relative independence or rotation of the different sections.

6. Device according to one of Claims 1 or 2 hereinabove, characterized in that each section of screw comprises on the one hand a cylindrical mandrel concentric to the axis of the screw and on the other hand a receiver housing, each section of screw being adapted to be engaged by its mandrel in the receiver housing of the adjacent section of screw and itself to receive by its receiver housing the mandrel of the section of screw located on the opposite side, the interface separating the outer wall of a mandrel from the inner wall of its receiver housing being provided with at least one stop located on a wall and a groove in the form of a segment of circle, located on the other wall, receives said stop, the kinematic coupling of one screw section with respect to the adjacent section being effected, for a given direction of rotation, by abutment of the stop on a terminal end of said groove.

7. Device according to one of Claims 1 or 2 hereinabove, characterized in that each section of screw comprises on the one hand a mandrel which is generally cylindrical and concentric to the axis of the screw, and, on the other hand, a receiver housing, each mandrel of one section being adapted to be engaged in the receiver housing of the adjacent section, and the interface between the cylindrical mandrel and the receiver housing comprises coupling means constituted by a screw pitch allowing the free rotation of one section with respect to the adjacent section, for a certain number of rotations, between an end position of drive corresponding to one direction of rotation and the opposite position of drive corresponding to the direction of rotation opposite the preceding one.

**Patentansprüche**

1. Vorrichtung zum Bewegen von losen Stoffen oder Schüttgut in beispielshalber feinpulveriger, körniger oder teigartiger Form mit einer Schnecke, die mehrere von einander getrennte Abschnitte (1, 2, 3) aufweist, die kinematisch durch Antriebsorgane wie Anschläge (7, 8) miteinander verbunden sind, die von einem Abschnitt zum anderen zur Anlage kommen und durch die vorübergehend die Bewegung von einem vorderen an einen benachbart dahinter liegenden Abschnitt übertragen oder nicht übertragen werden kann, dadurch gekennzeichnet, dass jeder der Abschnitte in Form einer Hülse ausgebildet ist, auf der sich ein Teil der Schnecke abwickelt, und an einer gemeinsamen Welle (6) liegt.

2. Vorrichtung nach Anspruch 1, dadurch gekennzeichnet, dass die Welle (6) eine Antriebswelle ist, durch die die Übertragung der Bewegung von einem Ende zum anderen der aneinandergrenzenden Schnecke gewährleistet wird, so dass die Bewegung vom antreibenden Abschnitt an den angetriebenen Abschnitt in die eine oder andere Drehrichtung der Schraube übertragen wird, wobei eine Umkehrung der Drehung des antreibenden Abschnitts zum Auskuppeln von zwei benachbarten Abschnitten führt, bis der antreibende Anschlag, nach dem er eine Teildrehung durchgeführt hat, mit seiner gegenüberliegenden Fläche am Anschlag des angetriebenen Abschnitts zur Anlage kommt, so dass eine Richtungsumkehr des Antriebs der gesamten Schnecke durchgeführt werden kann.

3. Vorrichtung nach einem der Ansprüche 1 oder 2, dadurch gekennzeichnet, dass die Anschläge als angestückte Gussplatten (30, 31) ausgebildet sind, die fest mit der Aussenwand der Hülse jedes Abschnitts verbunden sind und über das Wandende der Hülse vorstehen, so dass sie auf das Hülsenende jedes Abschnitts übergreifen.

4. Vorrichtung nach Anspruch 2, dadurch gekennzeichnet, dass die von einander getrennten Abschnitte mittels Antriebsorgane an der Antriebswelle liegen, wobei jedes Antriebsorgan auskuppelbar ist, so dass bestimmte Abschnitte eine inaktive Stellung beziehen können, und wobei die Kupplung auf der Welle jedes Abschnitts durch pneumatische, hydraulische oder elektromagnetische Relais ferngesteuert werden kann.

5. Vorrichtung nach Anspruch 1, dadurch gekennzeichnet, dass die Schnecke aus getrennten Abschnitten (11, 12) gebildet ist, die über mit Torsion arbeitenden Federn wie Drehstabfedern oder zylindrische Schraubenfedern (14, 15) miteinander verbunden sind, durch die eine relative Unabhängigkeit oder die Drehung verschiedener Abschnitte gewährt wird.

6. Vorrichtung nach einem der vorhergehenden Ansprüche 1 oder 2, dadurch gekennzeichnet, dass jeder Schneckenabschnitt auf der einen Seite eine zylinderförmige, mit der Schneckenachse konzentrisch liegenden Hülse und auf der anderen Seite eine Aufnahme aufweist, wobei jeder Schneckenabschnitt von seiner Hülse in der Aufnahme des benachbarten Schneckenabschnitts in Eingriff genommen werden und seinerseits durch seine Aufnahme die Hülse des auf der gegenüberliegenden Seite liegenden Schneckenabschnitts aufnehmen kann, wobei die Übergangsfläche, die die Aussenwand einer Hülse von der Innenwand der Aufnahme trennt, mit zumindest einem auf der einen Wand sitzenden Anschlag und einer auf der anderen Wand befindlichen Kehlfläche in Form eines Kreissegments versehen ist und wobei die kinematische Kupplung eines Schneckenabschnitts gegenüber einem benachbarten Abschnitt in einer gegebenen Drehrichtung durch Anlage des Anschlags an das auslaufende Ende der Kehlfläche erfolgt.

7. Vorrichtung nach einem der vorhergehenden Ansprüche 1 oder 2, dadurch gekennzeichnet, dass jeder Schneckenabschnitt auf der einen Seite eine allgemein zylinderförmige und konzentrisch zur Schneckenwelle liegenden Hülse und auf der anderen Seite eine Aufnahme aufweist, wobei jede Hülse eines Abschnitts in der Aufnahme des benachbarten Abschnitts einrücken kann, und wobei die Übergangsfläche zwischen der zylinderförmigen Hülse und der Aufnahme eine aus einem Gewindegang bestehenden Kupplungseinrichtung aufweist, wodurch die freie Drehung eines Abschnitts gegenüber eines benachbarten Abschnitts während einer bestimmten Anzahl von Drehungen zwischen einer äussersten Antriebsstellung, die einer Drehrichtung entspricht, und einer entgegengesetzten Antriebsstellung erreicht wird, die der gegenläufigen Drehrichtung entspricht.

*Fig.1*

*Fig.2*

0 082 899

*Fig.3*

*Fig.4*

*Fig:5*

*Fig:6*

*Fig:7*

Fig. 8

Fig.9

Fig.10

22

31'

32

$F_3'$

31'

32

24

23

31

21

20

$F_2'$

30

23

24

31

21

20

$F_4'$

Fig.11

0 082 899

*Fig. 12*

*Fig. 13*

*Fig 14*

21